# EUROPEAN PATENT APPLICATION

(11) **EP 4 741 254 A2**
(43) Date of publication of application: **13.05.2026**
(21) Application number: 26160770.9
(22) Date of filing: 12.03.2020
(51) Int. Cl.: B61L 27/57

(54) **INFORMATION COLLECTION SYSTEM AND INFORMATION COLLECTION METHOD**

(30) Priority: 18.04.2019 JP 2019079663
(62) Divisional of application: 20791709.7
(71) Applicant: Hitachi, Ltd., Tokyo 100-8280 (JP)
(72) Inventor: WATANABE, Atsushi, Tokyo, 1008280 (JP); FURUTANI, Ryo, Tokyo, 1008280 (JP); HARA, Kosuke, Tokyo, 1008280 (JP)
(74) Representative: MERH-IP Matias Erny Reichl Hoffmann Patentanwälte PartG mbB

(57) **Abstract**

An information processing unit (120), comprising a storage device (202) and a control device (201) configured to execute a program stored in the storage device (150, 202), wherein the information processing unit (120) configured to collect information of a mobile terminal (101) when the mobile terminal (101) is in a train (160) being operated, the mobile terminal (101) having a plurality of sensors (103, 104) configured to acquire information of acceleration of the mobile terminal (101) and information of location of the mobile terminal (101), and the information of the mobile terminal (101) including the information of acceleration of the mobile terminal (101) and the information of location of the mobile terminal (101), and the information processing unit (120) configured to process information of the level of ride quality on a plurality of running sections of a railway track according to the collected information on a plurality of the trains (160) so that the information processing unit (120) can extract information of a running section, of the plurality of running sections, on which the level of ride quality of the plurality of trains (160) has deteriorated.

## Description

### BACKGROUND

The present information relates to an information collection system and an information collection method, and is suitable for application to, for example, an information collection system and an information collection method for collecting information related to ride quality.

As a technique for monitoring train ride quality affected by train vibrations during running, a state monitoring system has been disclosed in which, to maintain the ride quality of cars using as few sensors as possible, problems are detected by installing vibration accelerometers, for example, over car body floor portions around bogies and on axle boxes provided for wheels and measuring vibrations using the vibration accelerometers installed (see Japanese Unexamined Patent Application Publication No.2011-51518).

### SUMMARY

However, it is difficult to install, according to the state monitoring system disclosed in Japanese Unexamined Patent Application Publication No.2011-51518, acceleration sensors for measuring vibrations to affect ride quality in locations suitable for measurement inside cars of a train being commercially operated without spoiling the interior appearance of the cars and without interfering with passengers. Also, to comprehensively collect data from each car of all trains, there is a problem that installing a set of sensing devices including power supplies, data collection devices, etc. involves a high cost.

The present invention has been made taking the above aspects into consideration and is intended to propose an information collection system and an information collection method which can realize comprehensively collecting information related to ride quality at a low cost.

To achieve the above object, according to the present invention, an acquisition unit and a processing unit are provided. The acquisition unit acquires, from a mobile terminal possessed by a passenger of a mobile object, mobile-object state information indicating a state of the mobile object and boarding identifying information to identify a time when and a location where the passenger boards the mobile object. The processing unit, based on time information given when the mobile-object state information is acquired, associates location information on the mobile object given when the mobile-object state information is acquired, the mobile-object state information, and the boarding identifying information and stores in a storage unit.

According to the above configuration, for example, mobile-object state information is acquired as information related to ride quality from a mobile terminal possessed by a passenger of a mobile object, so that it is not necessary to newly install sensors for acquiring information related to ride quality. This makes it possible to realize comprehensively collecting information related to ride quality at a low cost.

According to the present invention, comprehensively collecting information related to ride quality can be realized at a low cost. Objects, configurations, and effects other than those described above of the present invention will be made clear by the following description of embodiments

### BRIEF DESCRIPTION OF THE DRAWINGS

FIG. 1 shows an example configuration of an information collection system according to a first embodiment.
FIG. 2 shows an example configuration of an information processing unit according to the first embodiment.
FIG. 3 shows an example flowchart for information processing performed at a mobile terminal according to the first embodiment.
FIG. 4 shows an example flowchart for information processing performed at an information processing unit according to the first embodiment.
FIG. 5 shows an example flowchart for abnormality detection processing according to the first embodiment.
FIG. 6 shows an example flowchart for information processing performed at a mobile terminal according to the first embodiment.

### DETAILED DESCRIPTION

In the following, an embodiment of the present invention will be described in detail with reference to drawings. The embodiment relates to a technology for monitoring, by sensing, ride quality and other factors affected by vibrations during traveling aboard a moving object. This embodiment will be described by way of an example of a train (train formation) traveling on a predetermined track.

### 1. First Embodiment

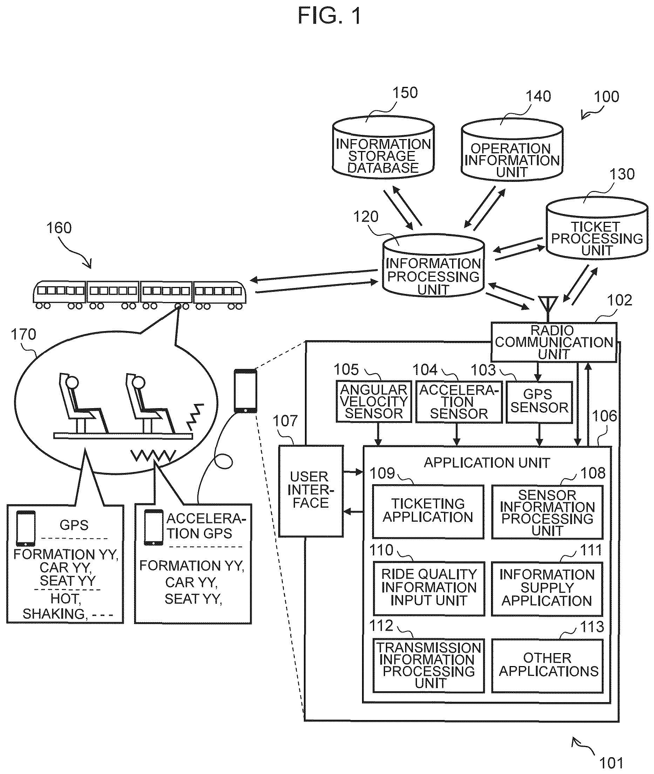

In FIG. 1, reference number 100 refers to a whole of an information collection system according to the first embodiment.

FIG. 1 shows an example configuration of the information collection system 100. The information collection system 100 is configured including an information processing unit 120 capable of communicating with a mobile terminal 101.

The mobile terminal 101 is a terminal (for example, a smartphone, a tablet terminal, or a laptop) possessed by a passenger 170 aboard a train 160 being commercially operated. The mobile terminal 101 is configured including a radio communication unit 102, a GPS (Global Positioning System) sensor 103, an acceleration sensor 104, an angular velocity sensor 105, an application unit 106, and a user interface 107.

The radio communication unit 102 transmits and receives information between, for example, the information processing unit 120, a ticket processing unit 130, a base station (not shown) for the mobile terminal 101, a GPS satellite (not shown), and a radio communication network (not shown) and the mobile terminal 101.

The GPS sensor 103 calculates current location information (hereinafter referred to as "GPS location information") based on information acquired, via the radio communication unit 102, from a GPS satellite, information from a base station of the mobile terminal 101, and information from a radio communication network. The acceleration sensor 104 detects acceleration in three axial directions. The angular velocity sensor 105 detects attitude changes in three axial directions.

The application unit 106 is configured including a sensor information processing unit 108, a ticketing application 109, a ride quality information input unit 110, an information supply application 111, a transmission information processing unit 112, and other applications 113.

The user interface 107 executes information presentation and information exchanges between passengers 170 and the application unit 106.

The sensor information processing unit 108 detects, based on information from the acceleration sensor 104 included in the mobile terminal 101 in an arbitrary attitude and information from the angular velocity sensor 105, components along vertical, lateral and front-rear directions of the acceleration of the train 160. A ticketing application 109 exchanges data with the ticket processing unit 130 that books tickets, inquires about tickets, and makes payments for tickets for the train 160, and stores ticket information about tickets purchased by passengers 170. The ticket information includes, for example, date and time of train operation, train Nos., car Nos., seat Nos, etc.

The passengers 170 input, via the ride quality information input unit 110, ride quality information such as opinions and requests regarding discomfort caused by shaking of the train 160, comfort of air conditioning, and noise in cars. The ride quality information inputted is transmitted to the information processing unit 120. At the information processing unit 120, by processing the ride quality information, for example, comfort information (for example, ride quality information by car and by seat) and convenience information for the passengers 170 (for example, information on cars and seats convenient for getting on and off and information on cars and seats convenient for transfers) is generated. The information generated is presented to the passengers 170 via the information supply application 111 in each mobile terminal 101.

The transmission information processing unit 112 removes user numbers and the like from ticketing information so as to prevent, when the sensor information (including acceleration information, angular velocity information, and GPS location information) processed at the sensor information processing unit 108 and the ticket information acquired by the ticketing application 109 is interlocked, individuals from being identified.

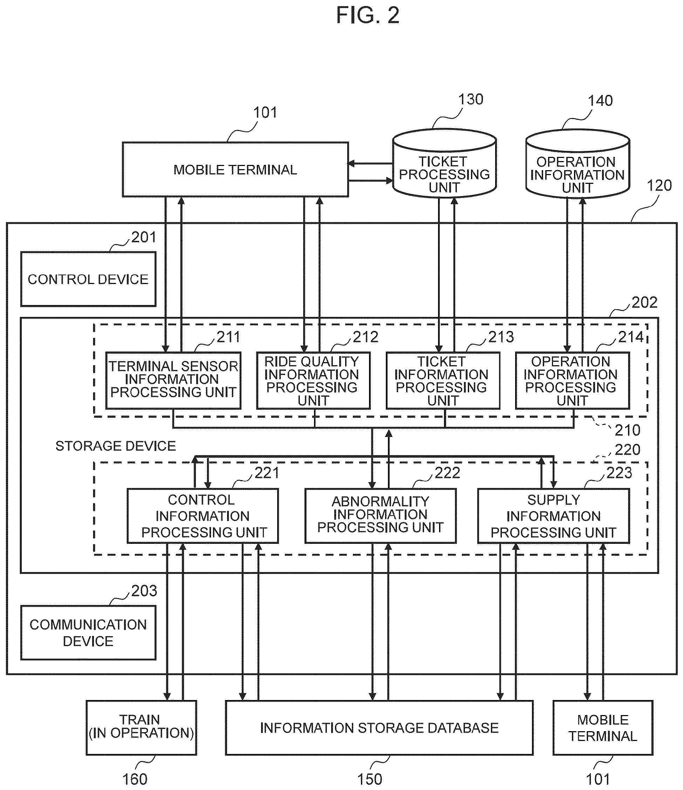

Next, with reference to FIGS. 1 and 2, the information processing unit 120, and the ticket processing unit 130, an operation information unit 140, an information storage database 150, and the train 160 that communicate and exchange data with the information processing unit 120 will be described.

FIG. 2 shows an example configuration related to the information processing unit 120.

The information processing unit 120 is, for example, a computer configured including a control device 201, a storage device 202, and a communication device 203.

The control device 201 is, for example, a CPU (Central Processing Unit) and performs various kinds of processing. The storage device 202 is, for example, a RAM (Random Access Memory), a ROM (Read Only Memory), or a HDD (Hard Disk Drive) and stores various kinds of information. The communication device 203 is, for example, a NIC (Network Interface Card) and communicates with various kinds of devices.

The functions of the information processing unit 120 (for example, functions of an acquisition unit 210 and a processing unit 220) may be realized, for example, by having a program read out from a ROM into a RAM and executed by a CPU (software) or by using hardware such as a dedicated circuit or by using a combination of software and hardware. Also, a part of the functions of the information processing unit 120 may be realized using another computer capable of communicating with the information processing unit 120. Further, part of the processing to be performed at the acquisition unit 210 may be performed at the processing unit 220, and part of the processing to be performed at the processing unit 220 may be performed at the acquisition unit 210.

The acquisition unit 210 includes a terminal sensor information processing unit 211, a ride quality information processing unit 212, a ticket information processing unit 213, and an operation information processing unit 214. The processing unit 220 includes a control information processing unit 221, an abnormality information processing unit 222, and a supply information processing unit 223.

The ticket processing unit 130, like the information processing unit 120, is, for example, a computer, hence, configuration not shown, and is configured including a control device, a storage device, and a communication device. The ticket processing unit 130, for example, books tickets, inquires about tickets, and makes payments for tickets for the train 160 by exchanging information with the ticketing application 109 installed in the mobile terminal 101. Also, when information such as a ticket number is received from the mobile terminal 101, the ticket processing unit 130 transmits (supplies) ticket information associated with the ticket number to the mobile terminal 101. When information such as a ticket number is received from the ticket information processing unit 213 included in the information processing unit 120, the ticket processing unit 130 transmits ticket information associated with the ticket number to the information processing unit 120.

The operation information unit 140, like the information processing unit 120, is, for example, a computer, hence configuration not shown, and is configured including a control device, a storage device, and a communication device. When a train No. of and time information (for example, date and time information) on the train 160 is received from the operation information processing unit 214 included in the information processing unit 120, the operation information unit 140 transmits operation information on the train 160 (operation record information indicating time, stations, and locations of train departure, passage, and arrival) to the operation information processing unit 214.

The information storage database 150, like the information processing unit 120, is, for example, a computer or a storage device, hence configuration not shown, and is configured including a control device, a storage device, and a communication device. The information storage database 150 stores various kinds of information.

The control information processing unit 221 extracts, for example, from the ride quality information processed at the ride quality processing unit 212, information such as air conditioning settings which can be immediately fed back to the train 160 in operation. When changing the air conditioning settings is determined necessary as a result of taking into consideration information on the air conditioning settings acquired from the train 160 and the information processed at the ride quality information processing unit 212, the control information processing unit 221 transmits information on changing the air conditioning settings to the train 160. Also, the control information processing unit 221 transmits the information on changing the air conditioning settings to the information storage database 150, and the information storage database 150 stores the information.

The abnormality information processing unit 222 detects, for example, based on acceleration information related to ride quality processed at the terminal sensor information processing unit 211, ride quality information processed at the ride quality information processing unit 212, ticket information acquired by the ticket information processing unit 213, and operation information acquired by the operation information processing unit 214, problems with equipment such as cars and seats, problems with infrastructure (for example, tracks), and information useful from a long-term perspective in designing cars and infrastructure. The information on problems with equipment and infrastructure will be useful from a medium to long term perspective for maintenance and train operation.

The supply information processing unit 223 supplies the passengers 170 with, for example, comfort information and convenience information for the passengers 170 via the information supply application 111 installed in the mobile terminal 101 of each passenger. The supply information processing unit 223 stores the information supplied to the passengers 170 in the information storage database 150.

Further, the mobile terminal 101 is, like the information processing unit 120, configured including a control device, a storage device, and a communication device. The functions of the mobile terminal 101 (for example, functions of the application unit 106) are realized, for example, by having a program read out from a ROM into a RAM and executed by a CPU (software).

In the following, an example method of collecting, utilizing the mobile terminal 101 of each passenger, information on the ride quality of the train 160 will be described with reference to FIGS. 1 to 6.

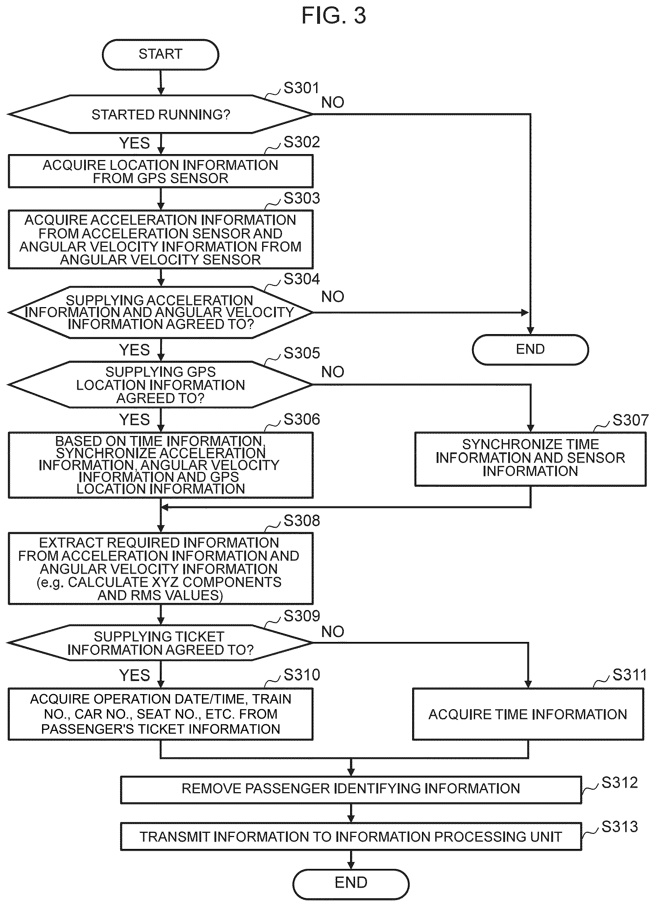

FIG. 3 shows an example flowchart for information processing performed at the mobile terminal 101.

In Step S301, the sensor information processing unit 108 of the mobile terminal 101 of each passenger 170 of the train 160 processes the sensor information acquired by the GPS sensor 103, acceleration sensor 104, and angular velocity sensor 105 installed in the mobile terminal 101, and determines whether the train 160 started running. The sensor information processing unit 108, when the train 160 is determined to have started running, advances processing to Step S302 and, when the train 160 is determined not to have started running, ends processing.

In Step S302, the sensor information processing unit 108 starts acquiring location information (GPS location information) by the GPS sensor 103.

In Step S303, the sensor information processing unit 108 starts acquiring acceleration information by the acceleration sensor 104 and angular velocity information by the angular velocity sensor 105.

Note that the GPS location information, acceleration information, and angular velocity information (sensor information) is acquired in synchronization with (corresponding to) time information. The determination to start sensor information acquisition may be made such that, when, based on train-160 operation time information acquired from the operation information unit 140 via the information processing unit 120, a train-160 departure time is determined to have approached (determined to have reached a predetermined threshold), it is determined to start acquiring the sensor information.

In Step S304, the sensor information processing unit 108 determines whether or not the passenger 170 has agreed to supply the acceleration information acquired by the acceleration sensor 104 and the angular velocity information acquired by the angular velocity sensor 105. The sensor information processing unit 108, when the agreement is determined to have been made, advances processing to Step S305, and, when the agreement is determined not to have been made, ends processing without acquiring the sensor information.

In Step S305, the sensor information processing unit 108 determines whether or not the passenger 170 has agreed to supply the GPS location information acquired by the GPS sensor 103. The sensor information processing unit 108, when the agreement is determined to have been made, advances processing to Step S306, and, when the agreement is determined not to have been made, advances processing to Step S307.

In Step S306, the sensor information processing unit 108 acquires acceleration information, angular velocity information, and GPS location information synchronizing (associating) them based on time information, and advances processing to Step S308.

In Step S307, the sensor information processing unit 108 acquires time information, acceleration information, and angular velocity information synchronizing (associating) them, and advances processing to Step S308.

In Step S308, the sensor information processing unit 108 extracts required information from the acceleration information and the angular velocity information. For example, the sensor information processing unit 108 identifies, based on the acceleration information and angular velocity information on the mobile terminal 101 in an arbitrary attitude, the attitude of the mobile terminal 101, and detects acceleration components in vertical, lateral, and front-rear directions of the train 160. The sensor information processing unit 108 performs processing to extract significant information based on as little data as possible, for example, by applying filtering processing, for example, for noise component removal, to time history acceleration components of the train 160 and periodically calculating RMS (Root Mean Square) values.

To improve detection accuracy for the acceleration components in vertical, front-rear, and lateral directions of the train 160, a system may be employed in which the accuracy of acceleration components in vertical, front-rear, and lateral directions of the train 160 is improved by determining the running direction of the train 160 using speed information acquired from the GPS sensor 103 and also map information and railway route information included in the other applications 113 installed in the mobile terminal 101.

In Step S309, the sensor information processing unit 108 determines whether or not the passenger 170 has agreed to supply ticket information. The sensor information processing unit 108, when the agreement is determined to have been made, advances processing to Step S310 and, when the agreement is determined not to have been made, advances processing to Step S311.

In Step S310, the sensor information processing unit 108 acquires, from the ticket information, boarding identifying information (such as train operation date and time, train No., car No., seat No., etc.) which can identify the time and location of the train 160 with the passenger 170 aboard, and advances processing to Step S312.

In Step S311, the sensor information processing unit 108 acquires time information on when the sensor information has been acquired, and advances processing to Step S312.

In Step S312, the transmission information processing unit 112, when the sensor information is to be transmitted together with the ticket information, removes information (such as a personal number and a mail address) which can be used to identify the passenger 170 from the ticket information.

In Step S313, the sensor information processing unit 108 transmits the information, prepared by removing information usable to identify the passenger 170 from the information acquired in Step S310 or S311, and the sensor information processed in Step S308 to the information processing unit 120 via the radio communication unit 102.

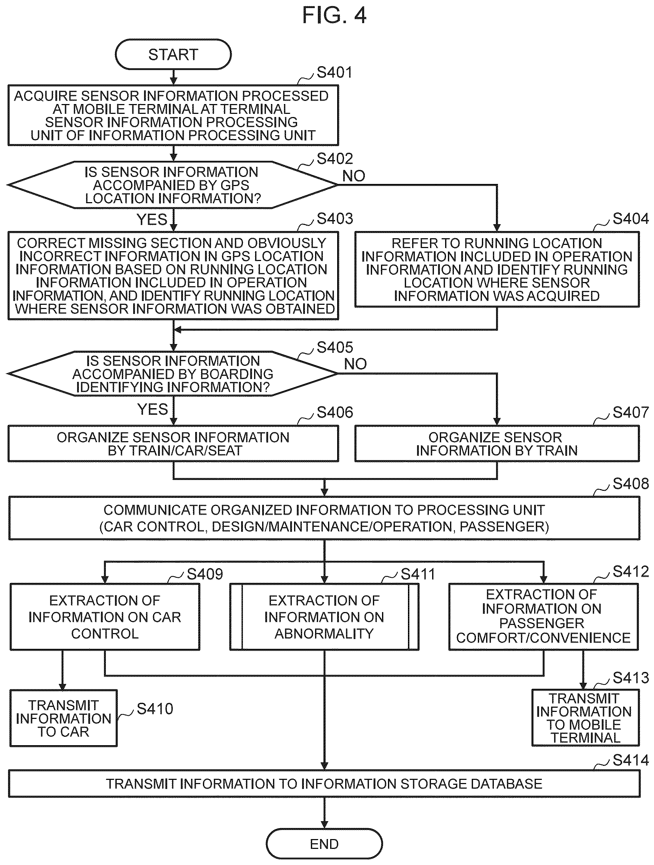

Next, with reference to FIG. 4, how to process and utilize the information transmitted from the mobile terminal 101 to the information processing unit 120 will be described.

FIG. 4 shows an example flowchart for information processing performed at the information processing unit 120.

In Step S401, the terminal sensor information processing unit 211 acquires the sensor information and ticket information or boarding identifying information (such as train operation date and time, train No., car No., seat No., etc.) transmitted from the mobile terminal 101 to the information processing unit 120.

In Step S402, the terminal sensor information processing unit 211 determines whether or not the sensor information is accompanied by GPS location information. The terminal sensor information processing unit 211, when the sensor information is determined as being accompanied by the GPS location information, advances processing to Step S403 and, when the sensor information is determined as not being accompanied by the GPS location information, advances processing to Step S404.

In Step S403, the terminal sensor information processing unit 211 checks the GPS location information for a missing part and obviously incorrect location information. When a missing part or incorrect information is detected, the terminal sensor information processing unit 211 acquires operation information (time information and running location information) on the specific train 160 from the operation information unit 140 via the operation information processing unit 214 and carries out supplementation or correction based on the time information.

In Step S404, the terminal sensor information processing unit 211 acquires operation information (time information and running location information) on the specific train 160 from the operation information unit 140 via the operation information processing unit 214, supplements the running location information to the sensor information based on the time information, and identifies the location on a map or on the track where the acceleration information was acquired. The location where the acceleration information was acquired may be identified by referring to location information acquired from another passenger 170.

In Step S405, the terminal sensor information processing unit 211 determines whether or not the sensor information is accompanied by the boarding identifying information based on the ticket information. The terminal sensor information processing unit 211, when the sensor information is determined as being accompanied by the boarding identifying information, advances processing to Step S406 and, when the sensor information is determined as not being accompanied by the boarding identifying information, advances processing to Step S407.

In Step S406, the terminal sensor information processing unit 211 organizes the sensor information by train, by car, and by seat.

In Step S407, the terminal sensor information processing unit 211 assumes trains 160 based on the time information and organizes the sensor information by train.

In Step S408, the terminal sensor information processing unit 211 communicates the organized sensor information to the processing unit 220 (control information processing unit 221, abnormality information processing unit 222, supply information processing unit 223). In the processing unit 220, information extraction processing is performed for respective purposes.

In Step S409, the control information processing unit 221 extracts information related to car control. For example, the control information processing unit 221 extracts information on a section where the ride quality is poorer than normal and running deceleration has been determined necessary and information on a section where the level of ride quality is dangerously low and stopping the car has been determined necessary.

In Step S410, the control information processing unit 221 transmits the extracted information directly to the train 160 or gives directions via an operation management center (not shown). Also, the control information processing unit 221 transmits the extracted information to the information storage database 150 (Step S414).

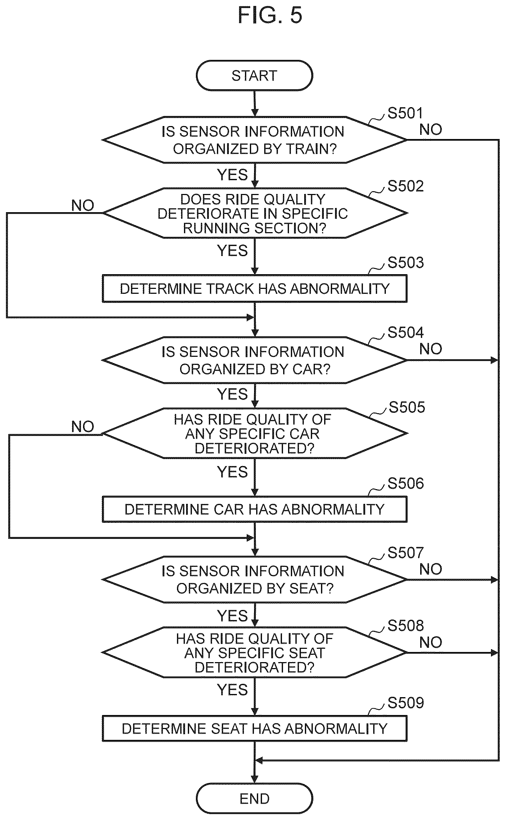

In Step S411, the abnormality information processing unit 222 extracts abnormality-related information (abnormality detection processing). For example, the abnormality information processing unit 222 extracts, from the acceleration information concerning ride quality, information such as on sections where track maintenance is required, on equipment problems, on operation changes attributable to equipment problems, and on infrastructure problems. The abnormality information processing unit 222 transmits the extracted information to the information storage database 150 (Step S414). The abnormality detection processing will be described later with reference to FIG. 5.

In Step S412, the supply information processing unit 223 extracts information related to the comfort and/or convenience of the passenger 170 (extraction of comfort information and/or convenience information). The control information processing unit 221 transmits the extracted information to the information storage database 150 (Step S414).

In Step S413, the supply information processing unit 223 transmits the extracted information as recommendable car and seat information to the mobile terminal 101 of each individual about to book the train 160 to become a passenger 170 via the information supply application 111 installed in the mobile terminal 101.

FIG. 5 is an example flowchart for abnormality detection processing.

In Step S501, the abnormality information processing unit 222 determines whether or not the sensor information is organized by train. The abnormality information processing unit 222, when the sensor information is determined as being organized by train, advances processing to Step S502 and, when the sensor information is determined as not being organized by train, ends the abnormality detection processing.

In Step S502, the abnormality information processing unit 222 determines, by comparing acceleration information in each running section of a predetermined length, whether or not there is any running section where ride quality deteriorates on many trains 160 or cars. The abnormality information processing unit 222, when such a running section is determined to exist, advances processing to Step S503 and, when no such running section is determined to exist, advances processing to Step S504.

In Step S503, the abnormality information processing unit 222 detects track abnormality. For example, the abnormality information processing unit 222 determines that the track has deteriorated in a running section where ride quality deteriorates, generates abnormality information (indicating, for example, a running section, an abnormality type, and an abnormality level), and advances processing to Step S504.

In Step S504, the abnormality information processing unit 222 determines whether or not the sensor information is organized by train. The abnormality information processing unit 222, when the sensor information is determined as being organized by train, advances processing to Step S505 and, when the sensor information is determined as not being organized by train, ends the abnormality detection processing.

In Step S505, the abnormality information processing unit 222 determines, by comparing acceleration information in each running section of a predetermined length, whether or not there is any specific car whose ride quality has deteriorated. The abnormality information processing unit 222, when the ride quality of any specific car is determined as having deteriorated, advances processing to Step S506 and, when the ride quality of no specific car is determined as having deteriorated, advances processing to Step S507.

In Step S506, the abnormality information processing unit 222 detects car abnormality. For example, the abnormality information processing unit 222 generates abnormality information (indicating, for example, a car No., an abnormality type, an abnormality level, etc.) to indicate abnormality detection about a specific car determined as having deteriorated or being in trouble, and advances processing to Step S507.

In Step S507, the abnormality information processing unit 222 determines whether or not the sensor information is organized by seat. The abnormality information processing unit 222, when the sensor information is determined as being organized by seat, advances processing to Step S508 and, when the sensor information is determined as not being organized by seat, ends the abnormality detection processing.

In Step S508, the abnormality information processing unit 222 determines, by comparing acceleration information in each running section of a predetermined length, whether or not there is any specific seat whose ride quality has deteriorated. The abnormality information processing unit 222, when the ride quality of any specific seat is determined as having deteriorated, advances processing to Step S509 and, when the ride quality of no specific seat is determined as having deteriorated, ends the abnormality detection processing.

In Step S509, the abnormality information processing unit 222 detects seat abnormality. For example, the abnormality information processing unit 222 generates abnormality information (indicating, for example, a seat No., an abnormality type, an abnormality level, etc.) to indicate abnormality detection about a specific seat determined as having deteriorated or being in trouble, and ends the abnormality detection processing.

Next, how to acquire ride quality information (such as opinions and requests from passengers 170 about ride quality) via the mobile terminal 101 of each passenger 170 will be described.

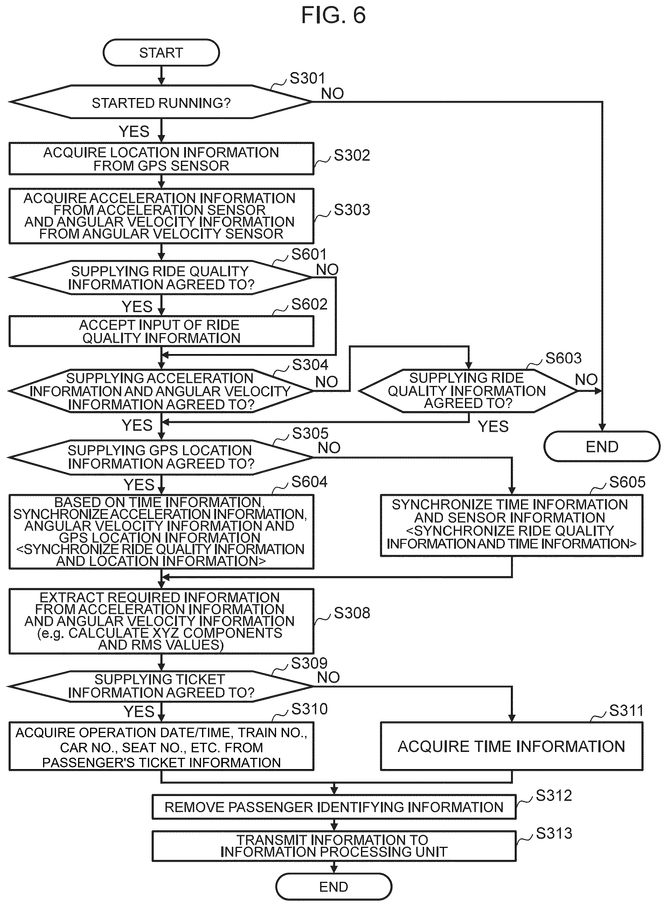

FIG. 6 shows an example flowchart for information processing at a mobile terminal 101 used in acquiring ride quality information. For the same processing as in FIG. 3, the same reference signs will be used, and the description of such processing will be omitted as appropriate.

In Step S601, the ride quality information input unit 110 of the mobile terminal 101 determines whether or not the passenger 170 has agreed to supply ride quality information. The ride quality information input unit 110, when the agreement is determined to have been made, advances processing to S602 and, when the agreement is determined not to have been made, advances processing to Step S304. After the agreement is determined not to have been made, the sensor information is to be acquired by the same method as described in FIG. 3.

In Step S602, the ride quality information input unit 110 accepts input of ride quality information.

Subsequently, the determination of Step S304 is made, and, in cases where the passenger 170 has agreed to supply the acceleration information and the angular velocity information, processing is advanced to Step S305; otherwise, processing is advanced to Step S603.

In Step S603, the ride quality information input unit 110 determines whether or not the passenger 170 has agreed to supply the ride quality information. The ride quality information input unit 110, in cases where the agreement is determined to have been made, advances processing to Step S305; otherwise, ends the processing.

Subsequently, the determination of Step S305 is made, and, in cases where the passenger 170 has agreed to supply the GPS location information, processing is advanced to Step S604; otherwise, processing is advanced to Step S605.

In Step S604, the sensor information processing unit 108 acquires the acceleration information, angular velocity information, and GPS location information synchronizing (associating) them based on time information. At this time, when the ride quality information is also available, the sensor information processing unit 108 also acquires the ride quality information in synchronization, and advances processing to Step S308.

In Step S605, the sensor information processing unit 108 acquires the time information, acceleration information, and angular velocity information synchronizing (associating) them. At this time, when the ride quality information is also available, the sensor information processing unit 108 also acquires the ride quality information in synchronization, and advances processing to Step S308.

In the following, example methods of processing and utilizing the ride quality information transmitted from the mobile terminal 101 to the information processing unit 120 will be described. Since the methods of processing and utilizing the ride quality information are similar to those of processing and utilizing the sensor information, FIG. 4 will be referred to as appropriate in the following description.

The ride quality information processed at the ride quality information processing unit 212 is communicated to the processing unit 220 (control information processing unit 221, abnormality information processing unit 222, and supply information processing unit 223). At the processing unit 220, information extraction processing is performed corresponding to respective purposes.

The control information processing unit 221 extracts, for example, from information on discomfort caused by shaking of the train 160, air-conditioning comfort in cars, and noise levels in cars, information on the comfort of air conditioning in cars which can be immediately fed back to the train 160 in operation. When changing the air conditioning settings is determined necessary as a result of taking into consideration information on the air conditioning settings acquired from the train 160 and the information extracted at the ride quality information processing unit 212, the control information processing unit 221 transmits information on changing the air conditioning settings to the train 160. Also, the control information processing unit 221 stores the transmitted information on changing the air conditioning settings in the information storage database 150.

The abnormality information processing unit 222, for example, regarding comfort-related information, checks infrastructure condition in sections where discomfort was reported as to shaking of the train 160 and noise in cars and checks equipment such as cars and seats about which discomfort was reported as to shaking of the train 160 and noise in cars. The abnormality information processing unit 222 also checks infrastructure condition in sections where complaints were received as to the comfort of air conditioning and also checks equipment such as cars and seats.

Also, for example, the abnormality information processing unit 222, by referring, as required, to the data processed at the terminal sensor information processing unit 211 concerning the sections and equipment about which discomfort was reported, extracts equipment problem information and infrastructure problem information and stores the extracted information in the information storage database 150.

The supply information processing unit 223, for example, generates information on recommendable cars and seats by combining comfort-related information such as information on shaking of the train 160, on air conditioning comfort in cars, and on noise levels in cars extracted at the ride quality information processing unit 212 and information based on the sensor information extracted at the terminal sensor information processing unit 211, for example, ride-quality information on individual cars and seats and information on cars and seats convenient for getting on and off or for transfers, and supplies the generated information to each individual about to book the train 160 to become a passenger (170) via the information supply application 111 installed in the mobile terminal 101. The supply information processing unit 223 stores the supplied information in the information storage database 150.

As described above, according to the present embodiment, acceleration information related to the ride quality of trains in commercial operation can be comprehensively collected at a low cost based on location information, acceleration information, and angular velocity information acquired by mobile terminals and boarding identifying information acquired from ticket information.

Also, according to the present embodiment, acceleration information and ride quality information related to the ride quality of trains in commercial operation can be comprehensively collected at a low cost based on location information, acceleration information, and angular velocity information acquired by mobile terminals, ride quality information inputted from mobile terminals, and boarding identifying information acquired from ticket information.

The present embodiment makes it possible at a low cost to collect data on and detect problems with equipment and infrastructure as information useful for maintenance and operation.

The above embodiment does not limit the present invention, and various modifications not departing from the purpose of the invention are included in the present invention. For example, the above embodiment has been described to make the present invention easily understandable, and the present invention is not necessarily limited to one provided with all the configurations described.

Also, for example, ride quality monitoring using sensor information from mobile terminals may be applied not only to trains (railway cars) running on predetermined tracks but also to large moving objects such as buses and aircraft. Furthermore, as mobile terminals installed with sensors to measure other physical quantities become widespread, comprehensive data collection based on the same concept as described above will become possible at a low cost to achieve the same effects as described above.

### 2. Other Embodiments

Though, in the embodiment described above, the present invention is applied to an information collection system, the application of the present invention is not limited to application collection systems and the invention can be widely applied to various other kinds of systems, devices, methods and programs.

Also, in the embodiment described above, as information related to ride quality, acceleration information and ride quality information are collected, but the present invention is not limited to such a procedure, and a procedure in which, as information related to ride quality, only either acceleration information or ride quality information is collected may be employed.

Also, in the embodiment described above, the communication device may be one or more interfaces. The one or more interfaces may be either one or more communication interface devices of a same type (for example, one or more NICs (Network Interface Cards) or two or more different types of communication interface devices (for example, an NIC and an HBA (Host Bus Adapter)).

Also, in the embodiment described above, the storage device includes at least a memory unit or a part of a PDEV unit (typically, at least a memory unit).

Also, in the embodiment described above, the memory unit is at least one memory and may typically be a main storage device. The at least one memory included in the memory unit may be a volatile memory or a non-volatile memory.

Also, in the embodiment described above, the PDEV unit is at least one PDEV and may typically be an auxiliary storage device. The "PDEV" standing for a Physical storage Device is, typically, a non-volatile storage device, for example, a HDD (Hard Disk Drive) or a SSD (Solid State Drive).

Also, in the embodiment described above, the control device is at least one processor. The at least one processor is, typically, a microprocessor like a CPU (Central Processing Unit), but may be a different type of processor like a GPU (Graphics Processing Unit). The at least one processor may include a single core or multiple cores. The at least one processor may be a hardware circuit (for example, FPGA (Field-Programmable Gate Array)) to perform a part or a whole of processing or a broad sense of a processor like an ASIC (Application Specific Integrated Circuit).

Also, regarding the embodiment described above, there may be cases in which a "program" is used as a subject in describing processing, but, since a program performs, by being executed by a control device, prescribed processing using a storage unit (for example, a memory) and/or an interface unit (for example, a communication port) as required, a processor may be used as a subject in describing processing. Processing described using a "program" as a subject may be considered as processing performed by a control device or a device including the control device. Also, the control device may include a hardware circuit (for example, a FPGA (Field-Programmable Gate Array) or an ASIC (Application Specific Integrated Circuit)) to perform a part or a whole of processing. The program may be installed from a program source to a device like a computer. The program source may be, for example, a recording medium (for example, a non-temporary recording medium) readable, for example, by a program distribution server or a computer. Also, in the following description, two or more programs may be realized as a program, or a program may be realized as two or more programs.

Also, in the above description, information such as programs, tables, and files for realizing various functions can be stored on recording devices such as memories, hard disks, and SSDs (Solid State Drives) or on recording media such as IC cards, SD cards, and DVDs.

The present invention has, for example, the following characteristic configurations.

An acquisition unit and a processing unit are provided. The acquisition unit (for example, an acquisition unit 210) acquires, from a mobile terminal (for example, a mobile terminal 101) possessed by a passenger (for example, a passenger 170) of a mobile object (for example, a train 160, a bus, or an airplane), mobile-object state information indicating a state of the mobile object (for example, sensor information, ride quality information, and train state information indicating a state of the train 160) and boarding identifying information to identify a time when and a location where the passenger boards the mobile object (for example, ticket information, train No., car No., seat No., etc.). The processing unit (for example, a processing unit 220), based on time information given when the mobile-object state information is acquired, associates location information on the mobile object given when the mobile-object state information is acquired, the mobile-object state information, and the boarding identifying information and stores in a storage unit (for example, an information storage database 150).

According to the above configuration, for example, mobile-object state information is acquired as information related to ride quality from a mobile terminal possessed by a passenger of a mobile object, so that it is not necessary to newly install sensors for acquiring information related to ride quality. This makes it possible to realize comprehensively collecting information related to ride quality at a low cost.

Also, for example, location information on a mobile object, train state information, and boarding identifying information are associated. Therefore, analysis to improve ride quality, car maintenance, track maintenance, and analysis to identify car conditions likely to develop on various tracks ARE facilitated. This is instrumental for future development and ride quality improvement.

The acquisition unit acquires, as the mobile-object state information, acceleration information acquired by an acceleration sensor (for example, an acceleration sensor 104) included in the mobile terminal, and the processing unit detects an abnormality by comparing, based on location information, acceleration information on plural passengers stored in the storage unit (for example, S411).

According to the above configuration, for example, based on vibrations (shaking) of a mobile object, deterioration of equipment of the mobile object can be detected as an abnormality. Abnormality detection makes it possible to control the mobile object (for example, for speed adjustment), maintain equipment of the mobile object, and prepare for next design. This makes it possible to further improve ride quality.

For example, in cases where the mobile object is a train, it becomes possible to detect, based on vibrations (shaking) of tracks over which the train runs and of trains, cars, and equipment such as seats, for example, track deterioration and equipment deterioration as abnormalities. Abnormality detection makes it possible to control the train (for example, for speed adjustment), maintain tracks and equipment, and prepare for next design. This makes it possible to further improve ride quality.

The mobile object is a train, and the processing unit, when the boarding identifying information is time information, organizes the acceleration information stored in the storage unit by train, compares the acceleration information in each running section of a predetermined length, and, when any running section where abnormal vibration is detected on many trains is detected, determines that a track in the running section has an abnormality (for example, S503).

According to the above configuration, track abnormalities can be detected, so that, for example, ride quality can be further improved by maintaining tracks.

The mobile object is a train, and the processing unit, when car information (for example, a car No., identifying information which can identify a car, etc.) indicating a car boarded by the passenger is included in the boarding identifying information, organizes the acceleration information stored in the storage unit by train, compares the acceleration information in each running section of a predetermined length, and, when any specific car on which abnormal vibration is detected is found, determines that the specific car has an abnormality (for example, S506).

According to the above configuration, car abnormalities can be detected, so that, for example, ride quality can be further improved by maintaining cars.

The processing unit, when seat information indicating a seat used by the passenger (for example, a seat No., identifying information which can identify a seat, etc.) is included in the boarding identifying information, organizes the acceleration information stored in the storage unit by seat, compares the acceleration information in each running section of a predetermined length, and, when any specific seat at which abnormal vibration is detected is found, determines that the seat has an abnormality (for example, S509).

According to the above configuration, seat abnormalities can be detected, so that, for example, ride quality can be further improved by maintaining seats.

The processing unit transmits information on an abnormality determined to exist (for example, information on vibrations larger than normal, unusual vibrations, uncomfortable vibrations, information on mobile object control, for example, deceleration control to reduce such vibrations, etc.) to the mobile object boarded by the passenger (for example, Step S410).

According to the above configuration, it is possible, for example, to automatically or manually control the mobile object based on abnormality information (for example, on unusually large shaking), so that ride quality can be further improved.

The processing unit transmits information on an abnormality determined to exist (for example, passenger comfort information and convenience information, to be more specific, for example, information on the magnitude of mobile object vibrations (ride quality) and information on convenience for getting on and off the mobile object and for transferring from the mobile object) to a mobile terminal possessed by an individual about to book the mobile object for boarding (for example Step S413).

According to the above configuration, based on abnormality information (for example, information on poor ride quality of the mobile object), people can book the mobile object taking into account the ride quality of the mobile object, so that ride quality can be further improved.

The acquisition unit acquires, as the mobile-object state information, information on the ride quality of the mobile object inputted by the passenger (for example, ride quality information), and the processing unit detects an abnormality by comparing, based on location information, the ride quality information inputted by plural passengers and stored in the storage unit (for example, FIG. 4 and FIG. 6).

According to the above configuration, for example, based on the ride quality of the mobile object, deterioration of equipment of the mobile object can be detected as an abnormality. Abnormality detection makes it possible to control the mobile object (for example, for speed adjustment), maintain equipment of the mobile object, and prepare for next design. This makes it possible to further improve ride quality.

For example, in cases where the mobile object is a train, it becomes possible to detect, based on the ride quality of tracks over which the train runs and of the train, cars, and equipment such as seats, for example, track deterioration and equipment deterioration as abnormalities. Abnormality detection makes it possible to control the train (for example, for speed adjustment), maintain tracks and equipment, and prepare for next design. This makes it possible to further improve ride quality.

The acquisition unit acquires, as the mobile-object state information, acceleration information acquired by the acceleration sensor included in the mobile terminal and ride quality information on the ride quality of the mobile object inputted by the passenger, and the processing unit associates location information on the mobile object, the acceleration information, the ride quality information, and the boarding identifying information and stores in the storage unit (for example, FIG. 4 and FIG. 6).

The present application may further include the following aspects:
A first aspect may relate to an information collection system, comprising:
an acquisition unit which acquires, from a mobile terminal possessed by a passenger of a mobile object, mobile-object state information indicating a state of the mobile object and boarding identifying information to identify a time when and a location where the passenger boards the mobile object; and
a processing unit which, based on time information given when the mobile-object state information is acquired, associates location information on the mobile object given when the mobile-object state information is acquired, the mobile-object state information, and the boarding identifying information and stores in a storage unit.

A second aspect may relate to the information collection system according to the first aspect,
wherein the acquisition unit acquires, as the mobile-object state information, acceleration information acquired by an acceleration sensor included in the mobile terminal, and
wherein the processing unit detects an abnormality by comparing, based on location information, acceleration information on a plurality of passengers stored in the storage unit.

A third aspect may relate to the information collection system according to the second aspect,
wherein the mobile object is a train, and
wherein the processing unit, when the boarding identifying information is time information, organizes the acceleration information stored in the storage unit by train, compares the acceleration information in each running section of a predetermined length, and, when any running section where abnormal vibration is detected on many trains is detected, determines that a track in the running section has an abnormality.

A fourth aspect may relate to the information collection system according to the second aspect,
wherein the mobile object is a train, and
wherein the processing unit, when car information indicating a car boarded by the passenger is included in the boarding identifying information, organizes the acceleration information stored in the storage unit by train, compares the acceleration information in each running section of a predetermined length, and, when any specific car on which abnormal vibration is detected is found, determines that the specific car has an abnormality.

A fifth aspect may relate to the information collection system according to the second aspect,
wherein the processing unit, when seat information indicating a seat used by the passenger is included in the boarding identifying information, organizes the acceleration information stored in the storage unit by seat, compares the acceleration information in each running section of a predetermined length, and, when any specific seat at which abnormal vibration is detected is found, determines that the seat has an abnormality.

A sixth aspect may relate to the information collection system according to the second aspect , wherein the processing unit transmits information on an abnormality determined to exist to the mobile object boarded by the passenger.

A seventh aspect may relate to the information collection system according to the second aspect, wherein the processing unit transmits information on an abnormality determined to exist to a mobile terminal possessed by an individual about to book the mobile object for boarding.

An eighth aspect may relate to the information collection system according to the first aspect,
wherein the acquisition unit acquires, as the mobile-object state information, ride quality information on ride quality of the mobile object inputted by the passenger, and
wherein the processing unit detects an abnormality by comparing, based on location information, the ride quality information inputted by a plurality of passengers and stored in the storage unit.

A ninth aspect may relate to the information collection system according to the first aspect,
wherein the acquisition unit acquires, as the mobile-object state information, acceleration information acquired by the acceleration sensor included in the mobile terminal and ride quality information on ride quality of the mobile object inputted by the passenger, and
wherein the processing unit associates location information on the mobile object, the acceleration information, the ride quality information, and the boarding identifying information and stores in the storage unit.

A tenth aspect may relate to an information collection method, comprising:
a first step wherein an acquisition unit acquires, from a mobile terminal possessed by a passenger of a mobile object, mobile-object state information indicating a state of the mobile object and boarding identifying information to identify a time when and a location where the passenger boards the mobile object; and
a second step wherein a processing unit, based on time information given when the mobile-object state information is acquired, associates location information on the mobile object given when the mobile-object state information is acquired, the mobile-object state information, and the boarding identifying information and stores in a storage unit.

According to the above configuration, location information on the mobile object, acceleration information, ride quality information, and boarding identifying information are associated. Associating the acceleration information which is objective data and the ride quality information which is subjective data makes abnormality assessment possible. For example, abnormality detection matching human senses becomes possible, so that ride quality can be further improved.

The above configurations may be appropriately changed, rearranged, combined, or omitted within the gist of the invention.

### List of Reference Signs

100: information collection system
101: mobile terminal
120: information processing unit

## Claims

1. An information processing unit (120), comprising a storage device (202) and a control device (201) configured to execute a program stored in the storage device (150, 202), **characterized in that**:
the information processing unit (120) is configured to collect information of a mobile terminal (101) when the mobile terminal (101) is in a train (160) being operated, the mobile terminal (101) having a plurality of sensors (103, 104) configured to acquire information of acceleration of the mobile terminal (101) and information of location of the mobile terminal (101), and the information of the mobile terminal (101) including the information of acceleration of the mobile terminal (101) and the information of location of the mobile terminal (101), and
the information processing unit (120) is configured to process information of the level of ride quality on a plurality of running sections of a railway track according to the collected information on a plurality of the trains (160) so that the information processing unit (120) can extract information of a running section, of the plurality of running sections, on which the level of ride quality of the plurality of trains (160) has deteriorated.

2. The information processing unit (120) according to claim 1, **characterized in that**:
the information processing unit (120) is configured to store, in the storage device (150, 202), information including the information of acceleration of the mobile terminal (101), the information of location of the mobile terminal (101) and information identifying the train (160), when the mobile terminal (101) is in the train (160), for processing the information of the level of ride quality.

3. The information processing unit (120) according to any one of claims 1 and 2, **characterized in that**:
the information processing unit (120) is configured to organize the collected information by each of the plurality of trains (160) and process the information of the level of ride quality.

4. The information processing unit (120) according to any one of claims 1 to 3, **characterized in that**:
the information processing unit (120) is configured to extract the information that the running section has deteriorated, if the level of ride quality of the plurality of trains (160) on the running section has deteriorated.

5. The information processing unit (120) according to claim 4, **characterized in that**:
the information processing unit (120) is configured to generate information of abnormality about a deteriorated running section and the level of abnormality of the deteriorated running section.

6. The information processing unit (120) according to any one of claims 4 and 5, **characterized in that**:
the information processing unit (120) is configured to generate information of abnormality about a deteriorated running section and a type of abnormality of the deteriorated running section.

7. The information processing unit (120) according to any one of claims 1 to 6, **characterized in that**:
the mobile terminal (101) is in a car of a plurality of cars of a train of the plurality of trains (160), and
the information processing unit (120) is configured to extract the information that the car has deteriorated, if the level of ride quality of the car running on an undeteriorated running section has deteriorated according to the collected information and information identifying the car.

8. The information processing unit (120) according to claim 7, **characterized in that**:
the information processing unit (120) is configured to generate information of abnormality about the deteriorated car and the level of abnormality of the deteriorated car.

9. The information processing unit (120) according to any one of claims 7 and 8, **characterized in that**:
the information processing unit (120) is configured to generate information of abnormality about the deteriorated car and a type of abnormality of the deteriorated car.

10. The information processing unit (120) according to any one of claims 1 to 9, **characterized in that**:
the mobile terminal (101) is on a location within a car of a plurality of cars of a train of the plurality of trains (160), and
the information processing unit (120) is configured to extract information about which location within the car has deteriorated, if the level of ride quality of the location within an undeteriorated car running on an undeteriorated running section has deteriorated according to the collected information and information identifying the location within the car.

11. The information processing unit (120) according to claim 10, **characterized in that**:
the information processing unit (120) is configured to generate information of abnormality about the deteriorated location and the level of abnormality of the deteriorated location.

12. The information processing unit (120) according to any one of claims 10 and 11, **characterized in that**:
the information processing unit (120) is configured to generate information of abnormality about the deteriorated location and a type of abnormality of the deteriorated location.

13. The information processing unit (120) according to any one of claims 1 to 12, **characterized in that**:
the mobile terminal (101) is a smartphone, a tablet terminal or a laptop.

14. An information processing method executed by an information processing unit (120) comprising a storage device (202) and a control device (201) executing a program stored in the storage device (150, 202), the method comprising:
collecting information by the information processing unit (120) of a mobile terminal (101) when the mobile terminal (101) is in a train (160) being operated, the mobile terminal (101) having a plurality of sensors (103, 104) acquiring information of acceleration of the mobile terminal (101) and information of location of the mobile terminal (101), the information of the mobile terminal (101) including the information of acceleration and the information of location; and
processing information by the information processing unit (120) of the level of ride quality on a plurality of running sections of a railway track according to the collected information on a plurality of the trains (160) so as to extract information of a running section, of the plurality of running sections, on which the level of ride quality of the plurality of trains (160) has deteriorated.

15. A computer program comprising instructions which, when the program is executed by a control device (201) of an information processing unit (120) having a storage device (202), cause the information processing unit (120) to:
collect information of a mobile terminal (101) when the mobile terminal (101) is in a train (160) being operated, the mobile terminal (101) having a plurality of sensors (103, 104) acquiring information of acceleration of the mobile terminal (101) and information of location of the mobile terminal (101), the information of the mobile terminal (101) including the information of acceleration and the information of location; and
process information of the level of ride quality on a plurality of running sections of a railway track according to the collected information on a plurality of the trains (160) so as to extract information of a running section, of the plurality of running sections, on which the level of ride quality of the plurality of trains (160) has deteriorated.
